# EUROPEAN PATENT SPECIFICATION

(11) **EP 2 965 488 B1**
(45) Date of publication and mention of the grant of the patent: **29.04.2020**
(21) Application number: 14714606.2
(22) Date of filing: 10.03.2014
(51) Int. Cl.: H04L 29/06, H04L 9/32, H04W 12/06, H04L 9/08

(54) **METHOD AND SYSTEM FOR PREPARING A COMMUNICATION BETWEEN A USER DEVICE AND A SERVER**
VERFAHREN UND SYSTEM ZUR HERSTELLUNG EINER KOMMUNIKATION ZWISCHEN EINER BENUTZERVORRICHTUNG UND EINEM SERVER
PROCÉDÉ ET SYSTÈME POUR PRÉPARER UNE COMMUNICATION ENTRE UN DISPOSITIF D'UTILISATEUR ET UN SERVEUR

(30) Priority: 08.03.2013 EP 13158289
(43) Date of publication of application: 13.01.2016
(73) Proprietor: NEC Corporation, Minato-ku Tokyo 108-8001 (JP)
(72) Inventor: KARAME, Ghassan, 69115 Heidelberg (DE); GIRAO, Joao, 67063 Ludwigshafen (DE); DOBRE, Dan, 81245 München (DE)
(74) Representative: Patent- und Rechtsanwälte Ullrich & Naumann
(86) International application number: PCT/EP2014/054607
(87) International publication number: WO 2014/135707

(56) References cited:
- US-A1- 2005 149 740
- US-A1- 2008 181 401
- US-A1- 2009 011 739
- US-A1- 2011 191 842
- SARVAR PATEL ET AL: "Eavesdropping without breaking the GSM encryption algorithm", 3GPP DRAFT; S3-040360, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Beijing; 20040504, 4 May 2004 (2004-05-04), XP050275351, [retrieved on 2004-05-04]

## Description

The present invention relates to a method for preparing a communication between a user device and a server, wherein the user device is operable to perform one or more deterministic algorithms by a secure element, preferably a SIM-card, and is queryable by the server, wherein keying information, preferably a subscriber key of a mobile operator, is storable in the secure element.

The present invention further relates to a system for preparing up a communication between a user device and a server, wherein the user device is operable to perform one or more deterministic algorithms by a secure element, preferably a SIM-card, and is queryable by the server, preferably for performing with a method according or on of the claims 1-9, wherein keying information, preferably a subscriber key of a mobile operator, is storable in the secure element.

Although applicable in general to secure elements providing one or more deterministic algorithms the present invention will be described with regard to SIM-cards.

Recently companies and enterprises tend to allow their employees to bring their own devices like tablets, laptops or smart phones to work. Reasons are for example that costs should be reduced, so that the company does not have to provide for each employee a company laptop of its own. Another reason is for example that the employee should be able to choose his own personal devices. However this leads to a significant increase of "external" or "foreign" devices in both large and small or medium enterprises. The device still belongs to the employee but the enterprise has to take care about enforcing its security policies and reducing its liability in terms of compromised devices. Therefore the employees' private data, private policies and their reluctance in modifying their own device or limiting its capabilities have to be taken into account when enforcing enterprise security policies.

To address the aforementioned problems in order to protect the secrecy of sensitive material stored on the mobile device secure elements such as smart cards, SIM-cards, TMP chips or the like are used, cf. the non-patent literature of
- "Bootstrapping Trust in Commodity Computers", B. Parno, J.M. Mc Cune, A. Perrig IEEE S&P 2010,
- "OSLO: Improving the security of Trusted Computing", Bernhard Kauer,
- Trusted Computing Group http://www.trustedcomputinggroup.org,
- IBM 4758 Basic Services Manual: http://www-03.ibm.com/security/cryptocards/pdfs/IBM_4758_Basic_Services_Manual_Rel ease_2_54.pdf,
- Kalman, G., Noll, J., UniK, K.: SIM as secure key storage in communication networks. In: International Conference on Wireless and Mobile Communications (ICWMC) (2007),
- Noll, J., Lopez Calvet, J.C., Myksvoll, K.: Admittance services through mobile phone short messages. In: International Multi-Conference on Computing in the Global Information Technology. pp. 77-82. IEEE Computer Society, Washington, DC, USA (2006) and
- Mantoro, T., Milisic, A.: Smart card authentication for Internet applications using NFC enabled phone. In: International Conference on Information and Communication Technology for the Muslim World (ICT4M) (2010).

In the above-mentioned non-patent literature of Kalman, G., Noll, J., UniK, K., SIM as secure key storage in communication networks. In: International Conference on Wireless and Mobile Communications (ICWMC) (2007), a SIM card is used for user authentication using an NFC radio interface. The NFC interface is used for transferring encryption keys whereas the SIM card is used for storing the master encryption key on the SIM card. An initial security setup has to be performed: A master key has to be stored on the SIM card and also this key has to be placed in an identity manager's database.

However in general by relying on these secure elements this consequently needs the enterprise to control all the information stored on his elements and having access to their secure keys. This requires typically that the enterprise provisions these secure elements.

In US 2005/0149740 A1 a method of authenticating an electronic device is shown utilizing device specific identifying data stored within the electronic device, and for example, information stored in or computed by a subscriber identity module card of the electronic device. A plurality of challenge and response pairs based upon the device specific identifying data are generated and stored in a database. When the electronic device is to be authenticated, a challenge and response pair is selected and the challenge is communicated to the electronic device. The electronic device responds with a response, the received response is compared to a response portion of the challenge response pair. A match confirms authentication.

In US 2009/0011739 A1 a method is shown in which a first device, e.g. a hub device of a home network,is temporarily provided with a SIM to store a challenge-response, and thereafter the first device uses the stored challenge-response to interrogate a second device e.g. a mobile telephone,to authenticate that the second device now has the SIM that the first device was previously provided with. A further method is shown in which the second device authenticates that the first device previously had access to the SIM by verifying that a response from one or more challenge-response pairs provided by the first device to the second device is the same as a response received by the second device from the SIM when the second device interrogates the SIM with the challenge of the challenge-response pair received earlier from the first device.

One of the drawbacks is therefore, that this assumption cannot be met in a plurality of realistic scenarios: For example in case when an enterprise whishes to rely on SIM-cards to store sensitive material, then the enterprise needs either to cooperate with the corresponding mobile operator to acquire access to the keys stored within the SIM-card or to provision SIM-cards itself which causes a lot of administration effort and costs.

It is therefore an objective of the present invention to provide a method and a system leveraging the secure functionality of existing secure elements without the knowledge of secure information like keys stored within the secure elements.

It is an even further objective of the present invention to provide a method and a system enabling bootstrap authentication in scenarios in which users can bring their own device.

It is an even further objective of the present invention to provide a method and a system enabling an effective detection of possible attacks during authentication.

It is an even further objective of the present invention to provide a method and a system which can be easily implemented in conventional methods and systems.

The aforementioned objectives are accomplished by a method of claim 1 and a system of claim 10.

According to the invention it has been recognized that in particular the secure functionality of conventional SIM-cards can be leveraged without the knowledge of the keys stored within the SIM-card.

According to the invention it has been further recognized that a one-way authentication process of secure elements can be leveraged to enable mutual authentication with a user device without requiring access to the keys stored within the user device.

According to the invention it has been further recognized that an enterprise is enabled to securely communicate with an employee's user device, for example in order for the employee to read E-mails to access a virtual private network or the like.

According to the invention it has been even further recognized that the usage of mobile devices is not hindered and does not affect the design and the protocols of secure elements in particular SIM-cards and it can be applied within all secure elements implementing for example basic GSM security functionality.

According to the invention it has been even further recognized that an enterprise does not require to provision secure elements by itself, for example cooperation with the mobile operators.

According to the invention it has been further recognized that the level of security is not reduced compared with conventional solutions relying for example on SIM-cards and subscriber keys.

According to the invention it has been even further recognized that a lightweight and effective detection of possible misbehavior, impersonation attacks, etc. by both the server and the user device is enabled.

Further features, advantages and preferred embodiments are described in the following subclaims.

According to a preferred embodiment the generated response information is provided to the server and the matching is performed directly with the stored signed responses and the generated response information of step f), wherein upon matching the user device is authenticated for communication with the server. This enables an easy way to provide an authentication procedure for the user device at the server, where the server compares the signed responses stored in the server and the provided response for example from SIM card queried with server information.

According to a further preferred embodiment both the user device and the server generate independently of each other secure information based on the stored signed responses and the response information, which is used for matching according to step g). This enables in an easy way to prepare a communication based on the generated secure information. If both the server and the user device generate secure information the secure information can be used for establishing a communication between the server and the user device without having to exchange the generated secure information in advance.

According to a further preferred embodiment the secure information is provided in form of a session key, wherein the session key is calculated without using keying information stored within the secure element based on a shared key between the server and the user device session information and a previously signed response. This enables in an easy way to generate the session key for a communication session between the user device and the server. For example the session key can be generated after the user a device is authenticated at the server.

According to a further preferred embodiment counter information is included for generating the one or more signed responses and/or for calculating the session key. This enables to easily detect man-in-the-middle-attacks: For example in the absence of active attacks counter information equals or corresponds to the session information whereas in case of an active attack counter information diverges from the session information.

According to a further preferred embodiment counter information indicates a counter of the number of sessions established by the user device and/or the server. This provides in an easy way counter information and enables a fast and efficient comparison between counter information and session information to detect man-in-the-middle-attacks.

According to a further preferred embodiment a cryptographic hash function is used for providing the server information. This enables a collision resistant and one way hash function to provide the challenges.

According to a further preferred embodiment the GSM-A3-algorithm is used as deterministic algorithm for performing step b) and/or the GSM-A8-algorithm is used as deterministic algorithm without using keying information stored within the secure element for generating the session key. This enables an easy and efficient implementation in currently existing GSM protocols.

According to a further preferred embodiment the time is measured for providing a correct response according to step e) upon challenging and based upon the measured time step f) is performed or not. By measuring the time for example it takes for the SIM-card to respond with the correct response and if this measured time is above a predefined threshold then e.g. the server rejects further steps for preparing the communication, e.g. the authentication verification. For example any attack over the air on the user device requires two times a roundtrip times worth of propagation time to succeed in the authentication phase. Therefore, preferably that threshold is set accordingly for over-the-air attacks so that the detection for such attacks is enhanced.

According to a further preferred embodiment the counter information is checked against the number of predetermined server information. This increases the possibility of detecting man-in-the-middle-attacks.

According to a further preferred embodiment the one or more challenges according to step a) are 128 Bit or higher challenges. This ensures on the one hand a high level of pseudo randomness and on the other hand enables an easy implementation in particular for the GSM-protocol.

According to a preferred embodiment of the system of claim 10 the server and/or the user device is being operable to establish a communication session between the server and the user device based on a session key, wherein the session key is calculated without using keying information stored within the secure element based on a shared key between the server and the user device session information and one of the previously signed responses. This enables in an easy way to establish a session key for a communication between a user device and a server after authentication.

There are several ways how to design and further develop the teaching of the present invention in an advantageous way. To this end it is to be referred to the patent claims subordinate to patent claim 1 and patent claim 10 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawings
- Fig. 1: shows schematically a conventional method for authenticating a user device at a mobile operator; and
- Fig. 2: shows schematically a method according to an embodiment of the present invention.

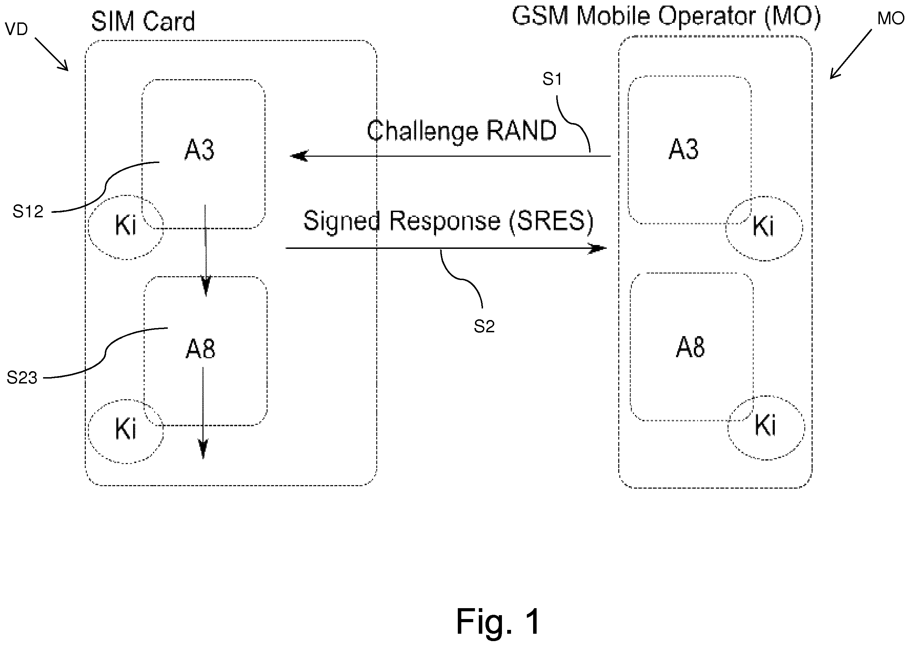

Fig. 1 shows schematically a conventional method for authenticating a user device at a mobile operator.

In Fig. 1 a basic authentication between a SIM-card and a mobile operator MO is shown. The SIM-card is used in a user device UD. In Fig. 1 both the user device UD with the SIM-card and the mobile operator MO share the same subscriber key Ki. To authenticate the user device UD respectively the SIM-card, the mobile operator MO sends in a first step S1 a randomly chosen challenge RAND to the user device UD. The user device UD executes the A3-algorithm according to the GSM protocol in a further step S12 with the input of the subscriber key Ki and the challenge RAND, outputs a signed response SRES in a second step S2 and sends the signed response SRES back to the mobile operator MO.

The mobile operator MO then authenticates the user device UD respectively the SIM-card by verifying the correctness of the signed response SRES by re-running the A3-algorithm itself using the provided challenge RAND and the subscriber key Ki as inputs.

For generating a session key Kc for a communication session between the user device UD and the mobile operator MO this session key Kc can be generated using the A8-algorithm according to the GSM-protocol on the user device UD respectively the SIM-card. On input of a challenge RAND from the mobile operator, for example provided in the first step S1, the user device UD respectively the SIM-card inputs the output of the A3-algorithm, namely the signed response SRES as input along with the shared subscriber key Ki. Then the A8-algorithm is performed in a further step S23 on both the SIM-card and on a server of the mobile operator MO. The A8-algorithm outputs then a shared session key Kc.

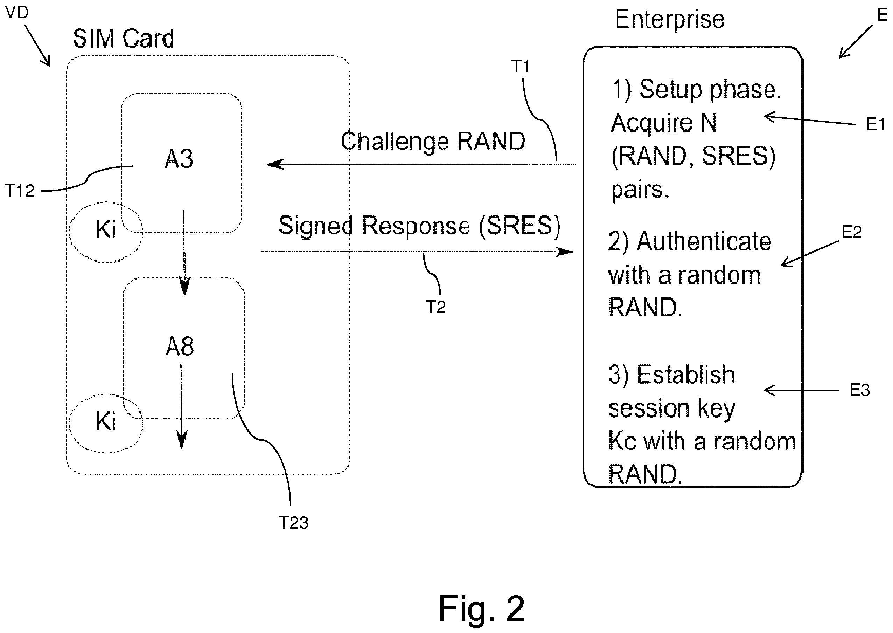

Fig. 2 shows schematically a method according to an embodiment of the present invention.

In Fig. 2 an embodiment according to the invention is shown: In more detail an enterprise E wishes to authenticate a mobile device UD of a given user U. Therefore the enterprise needs to ensure that the user device UD that it is authenticating is equipped with keys that are bound to the SIM-card. This ensures that no entity can forge and/or replicate those keys across devices without having access to a SIM-card being identifiable by the enterprise E.

In a first step E1 a set up phase is performed: To initiate the set-up phase the enterprise has access to the user device UD, namely the SIM-card for a small and limited period of time. During this time the enterprise E interfaces with the user device UD, i.e. the SIM-card using a secure and confidential channel. For example this secure and confidential channel can be provided by placing the SIM-card within a fully trusted mobile device provided by the enterprise E. Then the enterprise E queries the SIM-card for signed response values SRES corresponding to random numbers chosen pseudo-randomly by the enterprise E. Preferably the enterprise E applies keyed-hashing to chose a 128-Bit challenge RAND: RAND1 = H (Ke II 1), ..., RANDX = H (Ke II X), etc.. H () is a cryptographic hash function, i.e. collision resistant and one-way and Ke denotes a secret key and wherein X indicates for example the number of generated responses or more general counter information. The enterprise E generates a total of N of these challenges (RAND1, RAND2, ..., RANDN).

The enterprise E then challenges in a first step T1 the A3-algorithm according to the GSM protocol in the user device UD on the SIM-card with each of the challenges RAND1, RAND2, ..., RANDN and obtains the corresponding signed responses SRES1, SRES2, ..., SRESN. The enterprise E then stores the secret key Ke and all of the queried signed responses SRES1, SRES2, ..., SRESN. All the RAND challenges and the signed responses SRES are exchanged over a confidential channel.

In a second step E2 after the setup phase the enterprise E can authenticate the user device UD respectively the SIM-card in the user device in session X in the following way: The enterprise E computes the challenge RANDX for session X with the secret key Ke according to the formula: RANDX = H (Ke II X).

Then the enterprise E queries the user device UD, respectively the SIM-card in a first step T1 using one of the computed challenge RANDX and waits for the response RESP. The SIM-card computes the response according to the formula RESP = H (K II RANDX II SRESX II CTR), wherein K is the shared key, RANDX is the challenge for session X, SRESX is the output of the A3-algorithm according to the GSM protocol for the challenge RANDX and CTR is the counter for the number of sessions that the mobile device and/or the enterprise E have established. In the absence of active attacks CTR equals the identification number of the session X.

The enterprise E then checks if the response RESP matches SRESX previously collected by the enterprise E during the setup phase E1 and if yes then the authentication passes and the enterprise E is certain that it is communicating with the user device UD that has access to the correct SIM-card and to the correct key K. Preferably the enterprise E measures the time it takes for the SIM-card to respond with the correct response RESP. If this time exceeds a predetermined threshold then the enterprise E might reject the authentication verification. Preferably all the communication between the mobile operator and the mobile device UD can be performed over a secure channel using the shared key K.

To establish a session key a phase E3 similar to the authentication phase E2 is performed. To establish a session key Kc for session X, the enterprise E computes a session RANDX for the challenge X according to RANDX = H (Ke II X) and then queries the user device UD, i.e. the SIM-card, with the challenge RANDX. The user device UD and the enterprise E compute the session key Kc according to Kc = H (K II SREX II CTR) separately as a session key in session CTR. The key K is a key shared between the user device UD and the enterprise E, for example the shared key K could be derived from a user-input password. Therefore, the session key Kc can only be derived by having access to the correct SIM-card by the user device UD. Preferably all the communication between the enterprise E and the mobile device UD can be performed over a secure channel using the shared key K between the user device UD and the enterprise E.

In summary a session key Kc can be effectively established among the user device UD and the enterprise E by exchanging only one message namely sending the challenge RANDX to the user device UD. Preferably the session key establishment can be preceded by an interactive authentication phase, for example according to phase E2.

In the following it will be shown that the security of the method according to Fig. 2 reduces to the GSM security and any possible session hijacking will be eventually detected by the mobile operator MO. According to Fig. 2 only a user device UD that a) has access to the SIM-card and b) can acquire an appropriate user password and c) can query the SIM-card with a correct challenge RAND can pass the authentication phase and establish a session key Kc with the enterprise E:
- An external attacker that does not have access to the shared key K cannot eavesdrop on the communication between enterprise E and user device UD.
- No attacker can acquire Ki, i.e. the subscriber key, since it is stored in the tamper-resistant storage in the SIM card, and never leaves the SIM card.
- No attacker can predict the value of the challenges. Also each challenge is used only once. The challenges are pseudo-random and the challenge space is at least 128 bit, which makes it infeasible for any attacker to exhaust the challenge space chosen by enterprise E.
- Therefore, any entity that cannot access the correct SIM card at the time when the challenge is sent will fail the authentication checks.
- Access to the SIM card can be achieved using physical access or over the air (OTA) access. Accessing SIM cards OTA requires an adversary to invest in technologies that are used to impersonate mobile base stations. Any attack OTA reduces to an attack on the underlying GSM protocol suite. Such types of attacks are typically mitigated by the timing measurement that is performed by the enterprise E. In fact, any attack OTA requires 2 RTTs worth of propagation time to succeed in the authentication phase.
- We also point out that the attacker needs also to infiltrate the mobile device to acquire the shared key K, which makes the cost of performing this attack rather expensive.
- Even if the attacker can access the SIM card OTA, and has access to the SIM card, then the enterprise E will eventually detect that attack immediately during the next session it establishes. This is achieved using the reliance on local counters within the hash computation (both in the authentication and the session establishment phase). If the attacker succeeds in mounting one single attack, then the local counter on the mobile device will be different than that stored on enterprise E. This effectively prevents any further authentication of the mobile device by enterprise E and the enterprise E can then detect that there is a problem, and that the mobile device might have been compromised and proceed to change K, protect the user account, etc..

In summary the present invention in particular leverages in particular the properties of GSM security in order to bootstrap authentication in bring-your-own-device-settings preferably using a SIM-card without knowing its subscriber key. Further the present invention enables combining SIM-card usage with security protocols and timing measurements in order to effectively detect possible attacks on the authentication/key establishment phase and relies on a secure and efficient SIM-card secrete acquisition phase.

The present invention enables the authentication of mobile devices based on the inserted SIM-card without knowing the subscriber key operating within the SIM-card. The present invention further enables the construction of non-interactive session key establishments based on secrets stored within the SIM-card. Even further the present invention provides a method and a system enabling an effective detection of impersonation attacks and man-in-the-middle-attacks on the GSM security protocols and does not hinder the usage of mobile devices, does not affect the design and the protocols of the SIM-card and can be applied with all SIM-cards implementing the basic GSM security functionality.

The present invention has inter alia the following advantages: Unlike conventional methods and systems the present invention does not require the knowledge of the subscriber key that is stored within the SIM-card and further does not require the enterprise to provision secure elements by itself, for example by cooperation with mobile operators. The present invention has the further advantage that it does not reduce the level of security when compared to conventional solutions relying or based on SIM-cards and on their subscriber keys. The present invention further leverages conventional GSM security with security protocols ensuring a lightweight and effective detection of possible misbehavior, impersonation attacks, etc. by both the enterprise and the mobile device.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications are possible within the scope of the appended claims. Although specific terms are employed herein, they are used in a generic and descriptive sense only and not for purposes of limitation.

## Claims

1. A method for preparing a communication between a user device (UD) and a server (E), wherein the user device (UD) is operable to perform one or more deterministic algorithms by a secure element, preferably a SIM-card, and is queryable by the server (E), wherein keying information, preferably a subscriber key of a mobile operator, is storable in the secure element, wherein the server (E) does not have explicit knowledge of said keying information,
comprising the steps of
a) Challenging the secure element with non-guessable server information using a secure channel,
b) Generating one or more signed responses by performing by the secure element one of the deterministic algorithms based on the server information and the keying information stored in the secure element,
c) Storing the server information and the one or more signed responses transmitted to the server (E) via the secure channel on the server (E),
d) Challenging the secure element with one of the stored server information by the server (E),
e) Generating response information by the secure element by performing the one of the deterministic algorithms with the received server information and the keying information stored within the secure element to obtain a signed response and wherein generating the response information is based on the server information, the obtained signed response, a shared key between the server (E) and the user device (UD) and session information without using the keying information stored within the secure element,
f) Preparing a communication between the user device (UD) and the server (E) based on a matching performed by the server (E) based on the stored signed responses and the generated response information,
wherein both the user device (UD) and the server (E) generate independently of each other secure information in form of a session key, based on the stored signed response, which is used for matching according to step f), wherein the session key is calculated based on a shared key between the server (E) and the user device (UD), session information (X) and one of the signed responses without using the keying information stored within the secure element.

2. The method according to claim 1, **characterized in that** the generated response information is provided to the server (E) and the matching is performed directly with the stored signed responses and the generated response information of step f), wherein upon matching the user device (UD) is authenticated for communication with the server (S).

3. The method according to one of the claims 1-2, **characterized in that** counter information is included for generating the one or more signed responses and/or for calculating the session key.

4. The method according to claim 3, **characterized in that** counter information indicates a counter for the number (X) of sessions established by the user device (UD) and/or the server (E)

5. The method according to one of the claims 1-4, **characterized in that** a cryptographic hash-function is used for providing the server information.

6. The method according to one of the claims 1-5, **characterized in that** the GSM-A3-algorithm is used as deterministic algorithm for performing step b).

7. The method according to one of the claims 1-6, **characterized in that** the time is measured for providing a correct response according to step e) upon challenging and that based upon the measured time step f) is performed or not.

8. The method according to claim 3, **characterized in that** the counter information is checked against the number of predetermined session (X).

9. The method according to one of the claims 1-8, **characterized in that** the one or more challenges according to step a) are a 128 bit or higher challenges.

10. A system for preparing a communication between a user device (UD) and a server (E), wherein the user device is operable to perform one or more deterministic algorithms by a secure element, preferably a SIM-card and is queryable by the server (E), wherein keying information, preferably a subscriber key of a mobile operator, is storable in the secure element,
wherein the server (E) does not have explicit knowledge of said keying information, wherein the server (E) being operable to challenge the secure element with non-guessable server information using a secure channel, to store the server information and the one or more signed responses transmitted to the server (E) via the secure channel, to challenge the secure element with stored server information and wherein the secure element being operable to generate one or more signed responses by performing one of the deterministic algorithms based on the server information and the keying information stored in the secure element and to generate response information by performing the one of the deterministic algorithms with the received server information and the keying information stored within the secure element to obtain a signed response and wherein generating the response information is based on the server information, the obtained signed response, a shared key between the server (E) and the user device (UD) and session information without using the keying information stored within the secure element and wherein
the server (E) being operable to prepare a communication between the user device (UD) and the server (E) based on a matching based on the stored signed responses and the generated response information,
wherein both the user device (UD) and the server (E) are operable to generate independently of each other secure information in form of a session key, based on the stored signed responses, which is used for said matching, wherein the session key is calculated based on a shared key between the server (E) and the user device (UD), session information (X) and one of the signed responses without using the keying information stored within the secure element.

## Patentansprüche

1. Verfahren zur Vorbereitung einer Kommunikation zwischen einem Nutzergerät (UD) und einem Server (E), wobei das Nutzergerät (UD) ausgebildet ist, ein oder mehrere deterministische Algorithmen durch ein sicheres Element auszuführen, vorzugsweise eine SIM-Karte und es ist abfragbar durch den Server (E), wobei Schlüsselinformationen, vorzugsweise ein Teilnehmerschlüssel eines mobilen Betreibers, in dem sicheren Element speicherbar sind, wobei der Server (E) keine explizite Kenntnis der besagten Schlüsselinformationen hat, umfassend die Schritte
a) Herausfordern des sicheren Elements mit nicht-erratbaren Server-Informationen über einen sicheren Kanal,
b) Erzeugen von einer oder mehreren signierten Antworten mittels Durchführen von einem der deterministischen Algorithmen basierend auf den Server-Informationen und den Schlüsselinformationen, die in dem sicheren Element gespeichert sind,
c) Speichern der Serverinformationen und der einen oder mehreren signierten Antworten, die zu dem Server (E) über den sicheren Kanal übermittelt wurden, auf dem Server (E),
d) Herausfordern des sicheren Elements mit den einen oder mehreren gespeicherten Serverinformationen durch den Server (E),
e) Erzeugen von Antwortinformationen durch das sichere Element mittels Durchführen von einem der deterministischen Algorithmen mit den erhaltenenen Serverinformationen und den Schlüsselinformationen, die in dem sicheren Element gespeichert sind, um eine signierte Antwort zu erhalten und wobei das Erzeugen der Antwortinformationen auf den Serverinformationen, der erhaltenen signierten Antwort, einem zwischen dem Server (E) und dem Nutzergerät (UD) geteilten Schlüssel und Sitzungsinformationen basiert ohne die Schlüsselinformationen, die in dem sicheren Element gespeichert sind, zu benutzen,
f) Vorbereiten einer Kommunikation zwischen dem Nutzergerät (UD) und dem Server (E) basierend auf einem Abgleichen, was durch den Server (E) durchgeführt wird, basierend auf den gespeicherten signierten Antworten und den erzeugten Antwortinformationen,
wobei sowohl das Nutzergerät (UD) als auch der Server (E) unabhängig voneinander sichere Informaionen in Form eines Sitzungssschlüssels erzeugen basierend auf der/den gespeicherten signierten Antwort(en), was für ein Abgleichen gemäß Schritt f) benutzt wird, wobei der Sitzungsschlüssel berechnet wird basierend auf einem geteilten Schlüssel zwischen dem Server (E) und dem Nutzergerät (UD), Sitzungsinformationen (X) und einer der signierten Antworten ohne die Schlüsselinformationen, die in dem sicheren Element gespeichert sind, zu benutzen.

2. Verfahren gemäß Anspruch 1, **dadurch gekennzeichnet, dass** die erzeugten Antwortinformationen dem Server (E) zur Verfügung gestellt werden und das Abgleichen direkt mit den gespeicherten signierten Antworten und den erzeugten Antwortinformationen von Schritt f) durchgeführt wird, wobei bei einem Übereinstimmen das Nutzergerät (UD) zur Kommunikation mit dem Server (S) authentisiert wird.

3. Verfahren gemäß einem der Ansprüche 1-2, dadurch gekennezichnet, dass Zählerinformationen zur Erzeugung der einen oder mehreren signierten Antworten und/oder zur Berechnung des Sitzungsschlüssels berücksichtigt werden.

4. Verfahren gemäß Anspruch 3, **dadurch gekennzeichnet, dass** die Zählerinformationen einen Zähler für die Anzahl (X) der Sitzungen, die durch das Nutzergerät (UD) und/oder den Server (E) aufgebaut werden, wiedergibt.

5. Verfahren gemäß einem der Ansprüche 1-4, **dadurch gekennzeichnet, dass** eine kryptographische Hash-Funktion zur Bereitstellung der Serverinformationen genutzt wird.

6. Verfahren gemäß einem der Ansprüche 1-5, **dadurch gekennzeichnet, dass** der GSM-A3-Algorithmus als deterministicher Algorithmus zur Durchführung von Schritt b) genutzt wird.

7. Verfahren gemäß einem der Ansprüche 1-6, **dadurch gekennzeichnet, dass** die Zeit bis zur Bereitstellung einer richtigen Antwort gemäß Schritt e) nach dem Herausfordern gemessen wird und dass Schritt f) ausgeführt wird oder nicht, basierend auf der gemessenen Zeit.

8. Verfahren gemäß Anspruch 3, **dadurch gekennzeichnet, dass** die Zählerinformationen mit der Anzahl von vorbestimmten Sitzungen (X) gegengeprüft werden.

9. Verfahren gemäß einem der Ansprüche 1-8, **dadurch gekennzeichnet, dass** die einen oder mehreren Herausforderungen gemäß Schirtt a) 128 Bit-Herausforderungen oder höhere sind.

10. System zur Vorbereitung einer Kommunikation zwischen einem Nutzergerät (UD) und einem Server (E), wobei das Nutzergerät ausgebildet ist, ein oder mehrere deterministische Algorithmen durch ein sicheres Element auszuführen, vorzugsweise eine SIM-Karte, und es ist abfragbar durch den Server (E), wobei Schlüsselinformationen, vorzugsweise ein Teilnehmerschlüssel eines mobilen Betreibers, in dem sicheren Element speicherbar ist,
wobei der Server (E) keine explizite Kenntnis der besagten Schlüsselinformationen hat,
wobei der Server (E) ausgebildet ist, das sichere Element herauszufordern mit nicht-erratbaren Server-Informationen über einen sicheren Kanal, die Serverinformationen und die eine oder mehreren signierten Antworten, die zu dem Server (E) über den sicheren Kanal übermittelt wurden, zu speichern, das sichere Element herauszufordern mit den einen oder mehreren gespeicherten Server-informationen und wobei das sichere Element ausgebildet ist, eine oder mehrere signierte Antworten zu erzeugen mittels Durchführen von einem der deterministischen Algorithmen basierend auf den Serverinformationen und den Schlüsselinformationen, die in dem sicheren Element gespeichert sind und Antwortinformationen zu erzeugen mittels Durchführen von einem der deterministischen Algorithmen mit den erhaltenen Serverinformationen und den Schlüsselinformationen, die in dem sicheren Element gespeichert sind, um eine signierte Antwort zu erhalten und wobei das Erzeugen der Antwortinformationen auf den Serverinformationen, der erhaltenen signierten Antwort, einem zwischen dem Server (E) und dem Nutzergerät (UD) geteilten Schlüssel und Sitzungsinformationen basiert ohne die Schlüsselinformationen, die in dem sicheren Element gespeichert sind, zu benutzen, und wobei
der Server (E) ausgebildet ist, eine Kommunikation zwischen dem Nutzergerät (UD) und dem Server (E) vorzubereiten basierend auf einem Abgleichen basierend auf den gespeicherten signierten Antworten und den erzeugten Antwortinformationen,
wobei sowohl das Nutzergerät (UD) als auch der Server (E) ausgebildet sind, unabhängig voneinander sichere Informationen in Form eines Sitzungssschlüssels zu erzeugen basierend auf den gespeicherten signierten Antworten, was für besagtes Abgleichen benutzt wird, wobei der Sitzungsschlüssel basierend auf einem geteilten Schlüssel zwischen dem Server (E) und dem Nutzergerät (UD), Sitzungsinformationen (X) und einer der signierten Antworten berechnet wird ohne die Schlüsselinformationen, die in dem sicheren Element gespeichert sind, zu benutzen.

## Revendications

1. Procédé de préparation d'une communication entre un dispositif utilisateur (UD) et un serveur (E), dans lequel le dispositif utilisateur (UD) est exploitable de manière à mettre en œuvre un ou plusieurs algorithmes déterministes par le biais d'un élément sécurisé, de préférence une carte SIM, et peut être interrogé par le serveur (E), dans lequel des informations de chiffrement, de préférence une clé d'abonné d'un opérateur mobile, peuvent être stockées dans l'élément sécurisé, dans lequel le serveur (E) n'a pas de connaissance explicite desdites informations de chiffrement, le procédé comprenant les étapes ci-dessous consistant à :
a) mettre à l'épreuve l'élément sécurisé avec des informations de serveur non devinables en utilisant un canal sécurisé ;
b) générer une ou plusieurs réponses signées en mettant en œuvre, par le biais de l'élément sécurisé, l'un des algorithmes déterministes, sur la base des informations de serveur et des informations de chiffrement stockées dans l'élément sécurisé ;
c) stocker les informations de serveur et ladite une ou lesdites plusieurs réponses signées transmises au serveur (E) par l'intermédiaire du canal sécurisé sur le serveur (E) ;
d) mettre à l'épreuve l'élément sécurisé avec l'une des informations de serveur stockées, par le biais du serveur (E) ;
e) générer des informations de réponse, par le biais de l'élément sécurisé, en mettant en œuvre ledit un des algorithmes déterministes avec les informations de serveur reçues et les informations de chiffrement stockées dans l'élément sécurisé, en vue d'obtenir une réponse signée, et dans lequel l'étape de génération des informations de réponse est basée sur les informations de serveur, la réponse signée obtenue, une clé partagée entre le serveur (E) et le dispositif utilisateur (UD), et des informations de session, sans utiliser les informations de chiffrement stockées dans l'élément sécurisé ;
f) préparer une communication entre le dispositif utilisateur (UD) et le serveur (E), sur la base d'une mise en correspondance mise en œuvre par le serveur (E) sur la base des réponses signées stockées et des informations de réponse générées ;
dans lequel le dispositif utilisateur (UD) et le serveur (E) génèrent tous deux, indépendamment l'un de l'autre, des informations sécurisées sous la forme d'une clé de session, sur la base de la réponse signée stockée, qui est utilisée pour la mise en correspondance conformément à l'étape f), dans lequel la clé de session est calculée sur la base d'une clé partagée entre le serveur (E) et le dispositif utilisateur (UD), des informations de session (X), et l'une des réponses signées, sans utiliser les informations de chiffrement stockées dans l'élément sécurisé.

2. Procédé selon la revendication 1, **caractérisé en ce que** les informations de réponse générées sont fournies au serveur (E), et la mise en correspondance est mise en œuvre directement avec les réponses signées stockées et les informations de réponse générées de l'étape f), dans lequel, suite à la mise en correspondance, le dispositif utilisateur (UD) est authentifié en vue d'une communication avec le serveur (S).

3. Procédé selon l'une quelconque des revendications 1 à 2, **caractérisé en ce que** des informations de compteur sont incluses en vue de générer ladite une ou lesdites plusieurs réponses signées et/ou de calculer la clé de session.

4. Procédé selon la revendication 3, **caractérisé en ce que** des informations de compteur indiquent un compteur pour le nombre (X) de sessions établies par le dispositif utilisateur (UD) et/ou le serveur (E).

5. Procédé selon l'une quelconque des revendications 1 à 4, **caractérisé en ce qu'**une fonction de hachage cryptographique est utilisée en vue de fournir les informations de serveur.

6. Procédé selon l'une quelconque des revendications 1 à 5, **caractérisé en ce que** l'algorithme « GSM-A3 » est utilisé en tant qu'algorithme déterministe pour mettre en œuvre l'étape b).

7. Procédé selon l'une quelconque des revendications 1 à 6, **caractérisé en ce que** le temps est mesuré en vue de fournir une réponse correcte selon l'étape e) suite à la mise à l'épreuve, et **en ce que**, sur la base du temps mesuré, l'étape f) est mise en œuvre ou non.

8. Procédé selon la revendication 3, **caractérisé en ce que** les informations de compteur sont vérifiées par rapport au nombre de sessions prédéterminées (X).

9. Procédé selon l'une quelconque des revendications 1 à 8, **caractérisé en ce que** ladite une ou lesdites plusieurs mises à l'épreuve selon l'étape a) sont des mises à l'épreuve de 128 bits ou plus.

10. Système destiné à préparer une communication entre un dispositif utilisateur (UD) et un serveur (E), dans lequel le dispositif utilisateur est exploitable de manière à mettre en œuvre un ou plusieurs algorithmes déterministes par le biais d'un élément sécurisé, de préférence une carte SIM, et peut être interrogé par le serveur (E), dans lequel des informations de chiffrement, de préférence une clé d'abonné d'un opérateur mobile, peuvent être stockées dans l'élément sécurisé ;
dans lequel le serveur (E) n'a pas de connaissance explicite desdites informations de chiffrement ;
dans lequel le serveur (E) est exploitable de manière à mettre à l'épreuve l'élément sécurisé avec des informations de serveur non devinables en utilisant un canal sécurisé, à stocker les informations de serveur et ladite une ou lesdites plusieurs réponses signées transmises au serveur (E) par l'intermédiaire du canal sécurisé, à mettre à l'épreuve l'élément sécurisé avec des informations de serveur stockées, et dans lequel l'élément sécurisé est exploitable de manière à générer une ou plusieurs réponses signées en mettant en œuvre l'un des algorithmes déterministes, sur la base des informations de serveur et des informations de chiffrement stockées dans l'élément sécurisé, et à générer des informations de réponse en mettant en œuvre ledit un des algorithmes déterministes avec les informations de serveur reçues et les informations de chiffrement stockées dans l'élément sécurisé, en vue d'obtenir une réponse signée, et dans lequel l'étape de génération des informations de réponse est basée sur les informations de serveur, la réponse signée obtenue, une clé partagée entre le serveur (E) et le dispositif utilisateur (UD), et des informations de session, sans utiliser les informations de chiffrement stockées dans l'élément sécurisé ;
dans lequel le serveur (E) est exploitable de manière à préparer une communication entre le dispositif utilisateur (UD) et le serveur (E), sur la base d'une mise en correspondance sur la base des réponses signées stockées et des informations de réponse générées ; et
dans lequel le dispositif utilisateur (UD) et le serveur (E) sont exploitables de manière à générer tous deux, indépendamment l'un de l'autre, des informations sécurisées sous la forme d'une clé de session, sur la base des réponses signées stockées, qui est utilisée pour la mise en correspondance, dans lequel la clé de session est calculée sur la base d'une clé partagée entre le serveur (E) et le dispositif utilisateur (UD), des informations de session (X), et l'une des réponses signées, sans utiliser les informations de chiffrement stockées dans l'élément sécurisé.
